# EUROPEAN PATENT SPECIFICATION

(11) **EP 1 525 458 B1**
(45) Date of publication and mention of the grant of the patent: **08.03.2017**
(21) Application number: 03748920.0
(22) Date of filing: 24.06.2003
(51) Int. Cl.: G01N 23/223

(54) **FLOW METHOD AND APPARATUS FOR SCREENING CHEMICALS USING MICRO X-RAY FLUORESCENCE**
STRÖMUNGSVERFAHREN UND -VORRICHTUNG ZUM SCREENING VON CHEMIKALIEN MITHILFE VON MIKRORÖNTGENFLUORESZENZ
PROCEDE ET APPAREIL D'ECOULEMENT POUR LA SELECTION DE PRODUITS CHIMIQUES PAR MICRO-FLUORESCENCE X

(30) Priority: 25.07.2002 US 206524
(43) Date of publication of application: 27.04.2005
(73) Proprietor: Icagen, Inc., Durham, NC 27703 (US)
(72) Inventor: HAVRILLA, George, J., Los Alamos, NM 87544 (US); MILLER, Thomasin, C., Bartlesville, OK 74606 (US); WARNER, Benjamin, P., Los Alamos, NM 87544 (US); LEWIS, Cris, L., Los Alamos, NM 87544 (US); MAHAN, Cynthia, A., Los Alamos, NM 87544 (US); WELLS, Cyndi, A., Los Alamos, NM 87544 (US)
(74) Representative: Grund, Martin
(86) International application number: PCT/US2003/020103
(87) International publication number: WO 2004/011898

(56) References cited:
- WO-A1-96/40398
- US-A- 4 745 285
- US-A- 5 482 867
- US-B1- 6 225 132
- US-B1- 6 496 562
- MANN S E ET AL: "Element-Specific Detection in Capillary Electrophoresis Using X-ray FluorescenceSpectroscopy" ANALYTICAL CHEMISTRY, AMERICAN CHEMICAL SOCIETY. COLUMBUS, US, vol. 72, no. 8, 15 April 2000 (2000-04-15), XP002981917 ISSN: 0003-2700
- MANN ET AL: 'Element-Specific Detection in Capillary Electrophoresis Using X-ray FluorescenceSpectroscopy' ANALYTICAL CHEMISTRY vol. 72, no. 8, 15 April 2000, XP002981917

## Description

### FIELD OF THE INVENTION

The present invention relates generally to detecting binding events and more particularly to a flow method for detecting binding events between a potential pharmaceutical chemical and a target binder using micro-x-ray fluorescence spectroscopy.

### BACKGROUND OF THE INVENTION

Pharmaceutical chemicals are the active ingredients in drugs such as the now popular Prilosec™, Lipitor™, Zocor™, Prozac™, Zoloft™, and Celebrex™, and it is believed that their pharmaceutical properties are linked to their ability to bind to the "binding site" of one or more proteins. The binding properties of a protein largely depend on the exposed surface amino acid residues of the polypeptide chain (see, for example, Bruce Alberts et al., "Molecular Biology of the Cell", 2nd edition, Garland Publishing, Inc., New York, 1989; and H. Lodish et al., "Molecular Cell Biology", 4th edition, W. H. Freeman and Company, 2000). These amino acid residues can form weak noncovalent bonds with ions and other molecules. Effective binding generally requires the formation of many weak bonds at the "binding site" of the protein. The binding site is usually a cavity in the protein formed by a specific arrangement of amino acids. There must be a precise fit with the binding site for effective binding to occur. The shapes of binding sites may differ greatly among different proteins, and even among different conformations of the same protein. Even slightly different conformations of the same protein may differ greatly in their binding abilities. For these reasons, it is extremely difficult to predict which chemicals will bind effectively to proteins.

It can take many years to identify an effective pharmaceutical chemical. The desire to hasten the identification of important pharmaceutical chemicals is a constant challenge that has prompted the use of screening strategies for screening a large number of structurally or chemically related materials, known in the art as a "library," for binding properties to proteins.

Screening methods generally involve combining potential pharmaceutical chemicals with target binders and determining which, if any, of the potential pharmaceutical chemicals bind to any of the target binders. Potential pharmaceutical chemicals are preferably water-soluble organic compounds that can dissolve into the blood stream. Target binders are generally biological materials such as enzymes, non-enzyme proteins, DNA, RNA, microorganisms (e.g..prions, viruses, bacteria, and the like), human cells, plant cells, animal cells, and the like. Potential pharmaceutical chemicals that bind to at least one target binder are likely candidates for further investigation of pharmaceutical properties (e.g. efficacy and toxicity).

Some of the known screening methods are described in the following three patents.

U. S. Patent 6,147,344 to D. Allen Annis et al. entitled "Method for Identifying Compounds in a Chemical Mixture", which issued November 14, 2000, describe a method for automatically analyzing mass spectrographic data from mixtures of chemical compounds.

U. S. Patent 6,344,334 to Jonathan A. Ellman et al. entitled "Pharmacophore Recombination for the Identification of Small Molecule Drug Lead Compounds," which issued February 5, 2002, describes a method for identifying a drug lead compound that inhibits binding of target biological molecules by contacting these target biological molecules with a library of cross-linked, target, binding fragments.

U. S. Patent 6,395,169 to Ole Hindsgaul et al. entitled "Apparatus for Screening Compound Libraries," which issued May 28, 2002, describes an apparatus that employs frontal chromatography combined with mass spectrometry to identify and rank members of a library that bind to a target receptor.

Screening methods sometimes employ tagged materials because the analogous untagged material is otherwise not visible using the analytical technique chosen for the screening method. Tagging may involve attaching a labeled chemical portion to a chemical. An example of a screening method requiring tags is fluorescence activated cell sorting. An example of this method involves preparing a solution of cells and antibodies bearing a fluorescent tag. Some of the antibodies bind to some of the cells. One at a time, the cells flow past a laser beam and a detector (such as a ultraviolet/visible fluorescence detector). Cells that fluoresce are determined to be bound to the tagged antibodies, and are then deflected into a collector (see, for example, Bruce Alberts et al., "Molecular Biology of the Cell", 2nd edition, Garland Publishing, Inc., New York, 1989, pages 159-160).

It is generally assumed that the attachment of a fluorescent tag only serves to make visible the otherwise invisible chemical and/or target binder, and does not alter the binding properties of the untagged analog. Since it is well known that even small changes to the structure of a chemical or target binder may affect its function, this assumption may not be a valid one. Tagged surrogates are structurally different from their untagged counterparts, and these structural differences could affect their binding properties.

An efficient method for screening potential pharmaceutical chemicals for binding to target binders remains highly desirable.

Therefore, an object of the present invention is to provide an efficient method of evaluating the binding properties of potential pharmaceutical chemicals.

Another object of the present invention is an efficient method for screening binding events between potential pharmaceutical chemicals and target binders.

Yet another object of the present invention is a screening method that detects binding events between target binders and potential pharmaceutical chemicals that contain at least one atom with an atomic number of nine or higher.

Additional objects, advantages and novel features of the invention will be set forth in part in the description which follows, and in part will become apparent to those skilled in the art upon examination of the following or may be learned by practice of the invention. The objects and advantages of the invention may be realized and attained by means of the instrumentalities and combinations particularly pointed out in the appended claims.

### SUMMARY OF THE INVENTION

The invention is defined by the appended claims.

In accordance with the objects and purposes of the present invention, as embodied and broadly described herein, the present invention includes a method for screening a mixture of chemicals for binding to at least one target binder. The method includes preparing a solution of a mixture of chemicals by combining a mixture of chemicals with at least one target binder. The solution is flow- separated into at least two separated components. At least one of the flow- separated components is exposed to an x-ray excitation beam. The method also includes detecting an x-ray fluorescent signal emitted from at least one exposed, flow-separated component and isolating the flow-separated component having the detectable x-ray fluorescent signal. The identity of the isolated, flow-separated component can then be determined. In the method of the invention, an energy dispersive x-ray fluorescence spectrometer, equipped with a microfocus x-ray tube, is used.

The invention also includes an apparatus for screening a mixture of potential pharmaceutical chemicals for binding to at least one target binder. The apparatus includes a container for containing a solution of a mixture of chemicals and at least one target binder. The apparatus also includes a flow separator for separating the solution into at least two separated components. The apparatus also includes an x-ray excitation source for exposing at least one of the flow-separated components to an x-ray excitation beam. The x-ray excitation source is an energy dispersive x-ray fluorescence spectrometer, equipped with a microfocus x-ray tube. The apparatus also includes an x-ray detector for detecting an x-ray fluorescent signal emitted from a flow- separated component, a diverter for diverting a chosen flow-separated component, and a container for isolating the chosen, flow-separated component.

### BRIEF DESCRIPTION OF THE DRAWINGS

The accompanying drawings, which are incorporated in and form a part of the specification, illustrate the embodiment(s) of the present invention and, together with the description, serve to explain the principles of the invention. In the drawings:
Figure 1 shows a typical process flow diagram for the invention;
Figure 2 shows a schematic representation of an embodiment of an apparatus of the invention; and
Figure 3 shows an embodiment of a separator/sorter that can be used with the invention.

### DETAILED DESCRIPTION OF THE INVENTION

Briefly, the present invention includes a method for identifying binding events between potential pharmaceutical chemicals and target binders. The method involves modifying a mixture of potential pharmaceutical chemicals by adding at least one target binder to the mixture. After allowing sufficient time for any bound complex between any of the potential pharmaceutical chemicals and any of the target binders to form, if such a complex can form, the resulting solution is flow separated into at least two components. Each component is exposed to an x-ray excitation beam. If the exposed component emits a detectable x-ray fluorescence signal, that component is isolated. The identity of any isolated component can be determined using one or more standard analytical techniques, such as gas chromatography, liquid chromatography, mass spectrometry, nuclear magnetic resonance spectroscopy, infrared spectroscopy, ultraviolet spectroscopy, visible spectroscopy, elemental analysis, cell culturing, immunoassaying, and the like.

The method of the invention uses x-ray fluorescence as a probe to detect binding events. X-ray fluorescence is a powerful technique that has been used to determine the chemical elements that are present in a chemical sample, and to determine the quantity of those elements in the sample. The underlying physical principle of the method is that when an atom of a particular element is irradiated with x-ray radiation, the atom ejects a core electron such as a K shell electron. The resulting atom is in an excited state, and it can return to the ground state by replacing the ejected electron with an electron from a higher energy orbital. This is accompanied by the emission of a photon, i.e. x-ray fluorescence, and the photon energy is equal to the difference in the energies of the two electrons. Each element has a characteristic set of orbital energies and therefore, a characteristic x-ray fluorescence spectrum.

Many popular pharmaceutical chemicals, such as Prilosec™, Lipitor™, Zocor™, Prozac™, Zoloft™, and Celebrex™, contain the elements fluorine, chlorine, and/or sulfur. X-ray fluorescence is especially suited for detecting potential pharmaceutical chemicals because it can be used to detect and quantify these elements, and in general, to detect and quantify any element with an atomic number of nine or higher.

The invention also includes an apparatus for screening a mixture of potential pharmaceutical chemicals for binding to at least one target binder. The apparatus includes a container for containing a solution of a mixture of chemicals and at least one target binder. The apparatus also includes a flow separator for separating the solution into at least two separated components. The apparatus also includes an x-ray excitation source for exposing at least one of the flow- separated components to an x-ray excitation beam. The x-ray excitation source is an energy dispersive x-ray fluorescence spectrometer, equipped with a microfocus x-ray tube. The apparatus also includes an x-ray detector for detecting an x-ray fluorescent signal emitted from a flow- separated component, a diverter for diverting a chosen flow-separated component, and a container for isolating the chosen, flow-separated component.

An x-ray fluorescence spectrometer includes an x-ray excitation source and an x-ray detector. It is capable of irradiating a sample with an x-ray beam, detecting the x-ray fluorescence from the sample, and using the x-ray fluorescence to determine which elements are present in the sample and providing the quantity of these elements. The x-ray fluorescence spectrometer used to demonstrate the invention was the commercially available EDAX Eagle XPL energy dispersive x-ray fluorescence spectrometer, equipped with a microfocus x- ray tube, lithium drifted silicon solid state detector, processing electronics, and vendor supplied operating software.

The use of capillary electrophoresis with x-ray fluorescence has been described by S. E. Mann et al. in "Element-Specific Detection in Capillary Electrophoresis Using X-Ray Fluorescence Spectroscopy," Analytical Chemistry, vol. 72, pp. 1754-1758, (2000). Mann et al. report the preparation of a mixture of chelation complexes of CDTA (cyclohexane diamine tetraacetic acid) and subsequent separation using capillary electrophoresis. The separated complexes were detected using a synchrotron-generated monochromatic, 10 keV x-ray beam.

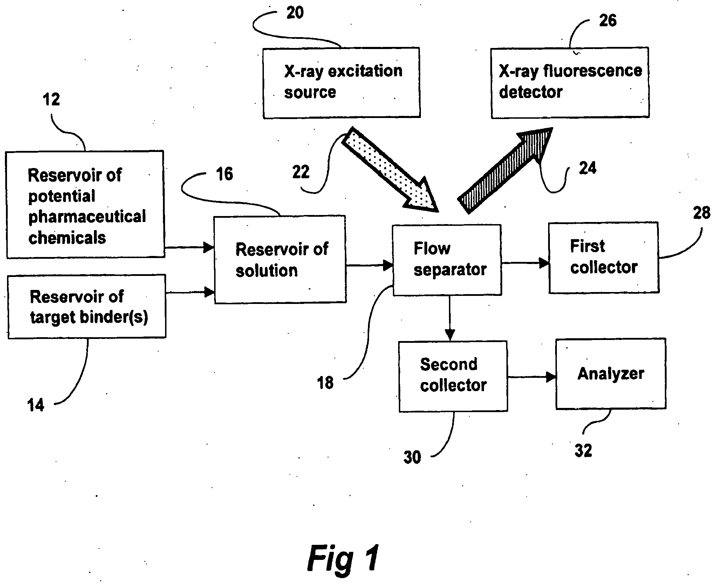

The practice of the invention can be further understood with the accompanying figures. Similar or identical structure is identified using identical callouts. Figure 1 shows a typical process flow diagram for the invention. According to the invention, potential pharmaceutical chemicals from reservoir 12 are combined with at least one target binder from target binder reservoir 14 to form a solution in reservoir 16. Potential pharmaceutical chemicals used with the invention are typically water soluble organic chemicals, and have at least one element with an atomic number of nine or greater. Preferably, they include at least one element selected from fluorine, chlorine, bromine, iodine, sulfur, phosphorus, selenium, lanthanum, cerium, praseodymium, neodymium, samarium, europium, gadolinium, terbium, dysprosium, holmium, erbium, thulium, ytterbium, lutetium, antimony, bismuth, and arsenic. Target binders that can be used with the invention include enzymes, non-enzyme proteins, DNA, RNA, plant cells, animal cells, human cells, and microorganisms (e.g. comprise prions, viruses, bacteria) and the like.

The solution of the mixture of potential pharmaceutical chemicals and target binder(s) enters flow separator 18, which uses a mobile phase to flow separate the solution into at least two components. Flow separators that can be used with the invention include, but are not limited to, centrifuges, cell sorters, or chromatographs (e.g. liquid chromatographs such as high performance liquid chromatographs; electrophoretic separators such as capillary electrophoretic separators, gel filtration chromatographs, gel permeation chromatographs, and the like). Preferably, the separator is a capillary electrophoresis separator, i.e. a long thin tube with a mobile phase (e.g. an aqueous buffer solution) inside the tube, and an electric potential across the length of the tube.

As the mixture separates into components, they are exposed to x-rays. After x-ray excitation source 20, preferably a rhodium target x-ray tube, delivers an x-ray beam 22 to a separated component, that component may or may not emit an x-ray fluorescent signal 24, which is detected by x-ray fluorescence detector 26. X-ray detectors that can be used with the invention include, but are not limited to, lithium-drifted silicon detectors, silicon drift detectors, or PIN diodes. If the exposed component does not emit an x-ray fluorescence signal, that component is directed to first collector 28. If the exposed component emits a fluorescence signal that is detected by x-ray fluorescence detector 26, it is directed to second collector 30. This component is expected to include at least one bound complex of potential pharmaceutical chemical and target binder.

While only a first collector and a second collector are shown in Fig. 1, it should be understood that more collectors may be used, depending on the number of separated components that are isolated from the mixture.

The separated component that emits a detectable x-ray fluorescence signal, i.e. the component directed to second collector 30, may then be sent to analyzer 32. Analyzers that can be used with the invention include, but are not limited to, gas chromatographs, liquid chromatographs, mass spectrometers, nuclear magnetic resonance spectrometers, infrared spectrometers, ultraviolet-visible (UV-VIS) spectrometers, fluorimeters, combustion analyzers (for elemental analysis), cell cultures, immunoassays, and the like. The choice of analyzer will depend on the nature of the potential pharmaceutical chemicals and/or binders being analyzed.

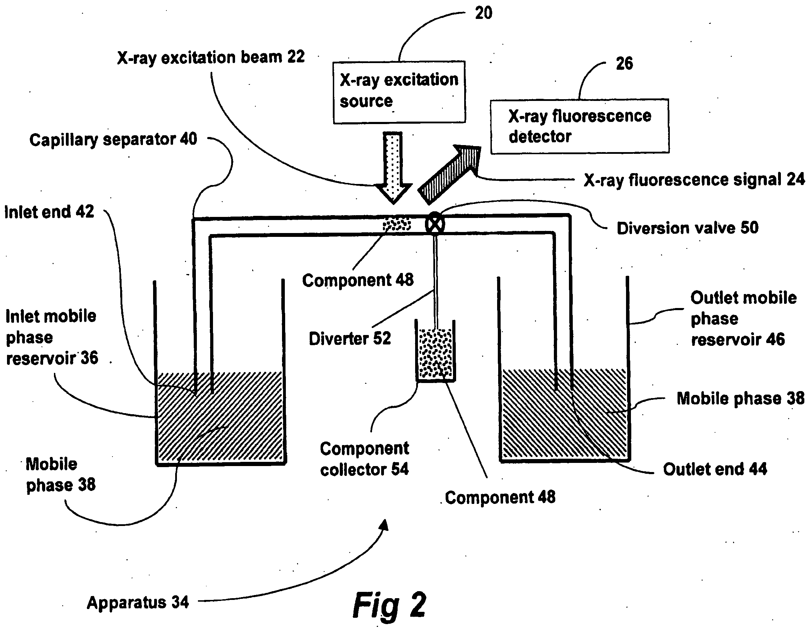

Figure 2 shows a schematic view of an embodiment of a screening apparatus of the invention. As Fig. 2 shows, screening apparatus 34 includes inlet mobile phase reservoir 36, which provides the mobile phase 38 for capillary separator 40. Inlet end 42 of separator resides in inlet mobile phase reservoir 36, while outlet end 44 resides in outlet mobile phase reservoir 46. After mobile phase 38 fills separator 40, an amount of a mixture of potential pharmaceutical chemicals and at least one target binder is introduced into inlet end 42 of separator 40. Inlet end 42 is then replaced into mobile phase reservoir 36. An electric potential between inlet end 42 and outlet end 44 of separator 40, which drives the flow of the mobile phase 38 and of the mixture through separator 40. Figure 2 shows that component 48 has separated from the mixture. Figure 2 shows x-ray excitation source 20 directing x-ray excitation beam 22 at separated component 48, which then emits x-ray fluorescence signal 24 that is detected by x-ray fluorescence detector 26. The detection of an emitted x-ray fluorescence signal triggers diversion valve 50, which diverts the flow of mobile phase 36 and separated component 48 to diverter 52, which directs mobile phase 36 and separated component 48 to component collector 54:

The separation previously described was achieved using an electric potential, which provided an electric gradient across the length of capillary separator 40. The separation can also be achieved by applying a pressure gradient along the length of the tube. In this embodiment, the tube would include a stationary phase; a sample injection inlet would be used to introduce the solution into the tube, and a pump would provide the pressure gradient, as it does for high performance liquid chromatography.

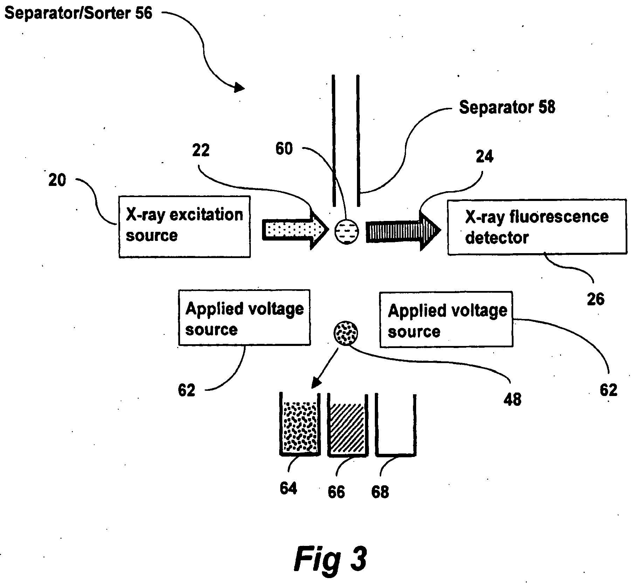

As Fig. 2 shows, component 48 is separated along a horizontal portion of capillary separator 40. This particular configuration is likely not optimal for separating complexes derived from using microorganism or cell target binders. For these target binders, a separator/sorter that separates along a vertical portion is preferred. Figure 3 shows an embodiment of such a separator/sorter that can be used with the invention: Separator/sorter 56 can be used for separating and sorting mixtures derived from cells, microorganisms, microspheres having attached proteins or nucleic acids, and the like. Separator/sorter 56 includes vertical separator 58 through which separation occurs. As Fig. 3 shows, the mixture has been separated into component 48 and component 60. Component 48 is had been subjected to x-ray beam 22 from x-ray excitation source 20 has emitted an x-ray fluorescence signal, which was detected by x-ray fluorescence detector 26. This triggered a response in applied voltage source 62, which applies a voltage that deflects component 48 into collector 64. If component 60 does not emit a detectable x-ray fluorescence signal, no voltage will be applied to deflect component 60 and it will flow into collector 66. However, if component 60 emits a detectable x-ray fluorescence signal, a voltage will be applied to deflect component 60 and it will flow into collector 68.

Separator/sorter 56 may include a laser source and associated detectors for performing conventional fluorescence activated cell sorting of the type described by Bruce Alberts et al., "Molecular Biology of the Cell", 2nd edition, Garland Publishing, Inc., New York, 1989, pages 159-160.

If a pharmaceutical chemical is needed to bond to a specific target binder protein, for example, a large number of different potential pharmaceutical chemicals can be screened according to the invention for binding to that protein. The invention can be used to distinguish which of the potential pharmaceutical chemicals bind strongly to the protein from those that bind weakly or not at all. The protein would be combined with about 10 to 10,000 potential pharmaceutical chemicals, wherein each of the potential pharmaceutical chemicals includes at least one element having an atomic number of nine or higher. Preferably, the potential pharmaceutical chemicals include an element having an atomic number of nine or higher that is not found in the target binder to simplify the screening method.

The invention could be used to, for example, determine whether either cobalt ion (Co²⁺) and/or cyanocobalamin bind to the known, biologically active protein Ure2p (see Finny G. Kuruvilla et al., "Dissecting Glucose Signaling With Diversity-Oriented Synthesis and Small-Molecule Microarrays," Nature, Vol. 416, pp. 653-657). An aqueous solution of cobalt (II) nitrate and cyanocobalamin would be added to Ure2p. The resulting aqueous solution would be flow separated according to the invention using, for example, a capillary electrophoresis separator. Any complex formed between the Ure2p and Co²⁺ and/or cyanocobalamin should have a retention time that differs from either Co²⁺ or cyanocobalamin, would emit a detectable x-ray fluorescence signal, and would be isolable using the invention.

The separation could be performed using, for example, a fused silica capillary tube (Polymicro Technologies™) having the following dimensions: 70 cm in length, 100 µm inner diameter (id), 170 µm outer diameter (od), and a Bertan™ Model ARB-30 high voltage power supply to provide the electric potential. The tube could be conditioned by first flushing it with a 1.0 molar (M) solution of NaOH for 15 min, then rinsing with distilled, de-ionized water for 15 min, and then flushing and filling with 75 mM Trisma run buffer (pH 8.0) for an additional 15 min.

A baseline was obtained by introducing an aqueous mixture of cobalt nitrate (Co(NO₃)₂, 200 ppm Co²⁺) and cyanocobalamin (10.2 mM) into the capillary tube, applying a potential of 10 kV between the ends of the tube, and separating the mixture into its components. An EDAX™ Eagle II micro x-ray fluorescence system equipped with a Rh target excitation source and a SiLi detector was used to interrogate each separated component and measure any emitted x-ray fluorescence signal. The x-ray tube of the system was operated at 40 kV and 1000 µA. The CoK_{α} x-ray emission was monitored to detect unbound Co²⁺ and cyanocobalamin. The spectrum acquisition time was about 10 seconds (s). The peak due to unbound Co²⁺ was detected at about 4.5 min with a full-width-at-half-maximum (FWHM) of about 1 min. The cyanocobalamin peak was detected at about 8.5 min with a FWHM of about 1.5 min.

Similarly, the invention could be used to determine whether ferritin and/or cyanocobalamin bind to Ure2p. An aqueous solution of ferritin and cyanocobalamin would be added to Ure2p. The resulting aqueous solution could be flow separated using a capillary electrophoresis separator. When exposed to an x-ray beam, the iron in ferrritin and the cobalt in cyanocobalamin each emit distinct and detectable x-ray fluorescence signals that could be used to determine whether a complex between ferritin and/or cyanocobalamin and Ure2p is formed..

A baseline was obtained as follows: A capillary electrophoresis separator was prepared using a Bertan™ Model ARB-30 high voltage power supply to provide the separation potential and a fused silica capillary tube (Polymicro Technologies™) having the following dimensions: 70 cm in length, 100 µm inner diameter (id), 170 µm outer diameter (od). The tube was conditioned by first flushing it with a 1.0 molar (M) solution of NaOH for 15 min, then rinsing with distilled, de-ionized water for 15 min, and then flushing with 100 mM Trisma run buffer (pH 8.0) for an additional 15 min.

An aqueous solution of ferritin (1.16 mg/ml) and cobalamin (10.2 mM) was introduced into the capillary tube. After a separation potential of 9.5 kV was applied between the ends of the tube, the solution flowed through the tube and separated into two components. An EDAX™ Eagle II micro x-ray fluorescence system equipped with a Rh target excitation source and a SiLi detector was used to interrogate each separated component and measure any emitted x-ray fluorescence signal. The x-ray tube of the system was operated at 40 kV and 1000 µA. The Cok_{α} and FeK_{α} x-ray emission lines were monitored to detect the Fe³⁺ bound ferritin and cobalamin. The spectrum acquisition time was about 10 seconds (s). The peak due to Fe³⁺ of ferritin was detected at about 9.3 min with a full-width-at-half-maximum (FWHM) of about 1.7 min. The cyanocobalamin peak was detected at about 6.3 min with a FWHM of about 1 min.

The invention can be used in pharmaceutical metabolite studies to detect dangerous metabolic byproducts of a potential pharmaceutical chemical. A potential pharmaceutical chemical having at least one atom with an atomic number of nine or higher could be given to a rat (or other test animal). A blood sample would be taken from the rat before administering the potential pharmaceutical chemical to provide a baseline. After administering the potential pharmaceutical, blood from the rat would be examined for the presence of metabolites using the method of the invention.

In summary, the present invention provides an apparatus and method for detecting binding events between potential pharmaceutical chemicals and target binders. The present invention uses micro-x-ray fluorescence to determine the presence and relative amounts of elements such as fluorine, chlorine, bromine, iodine, phosphorus, and sulfur, the latter two being important constituents of enzymes, non-enzyme proteins, DNA, and RNA. Thus, the invention provides a non-destructive method of screening the binding of potential pharmaceutical chemical with a target binder such as a protein or a nucleic acid. While known methods often require that the binder and/or potential pharmaceutical chemical include a covalently-bound tag that fluoresces upon exposure to ultraviolet excitation radiation, the invention does not require tagged materials.

The foregoing description of the invention has been presented for purposes of illustration and description and is not intended to be exhaustive or to limit the invention to the precise form disclosed, and obviously many modifications and variations are possible in light of the above teaching.

The embodiment(s) were chosen and described in order to best explain the principles of the invention and its practical application to thereby enable others skilled in the art to best utilize the invention in various embodiments and with various modifications as are suited to the particular use contemplated. It is intended that the scope of the invention be defined by the claims appended hereto.

## Claims

1. A method for screening potential pharmaceutical chemicals for binding to at least one target binder, comprising the steps of:
(a) preparing a solution of potential pharmaceutical chemicals and at least one target binder;
(b) flow separating the solution into at least two separated components;
(c) exposing at least one of the flow-separated components to an x-ray excitation beam; and
(d) detecting an x-ray fluorescent signal emitted from the at least one exposed, flow-separated component;
**characterized in that** the method additionally comprises the step of
(e) isolating any flow-separated component having a detectable x-ray fluorescent signal,
and that an energy dispersive x-ray fluorescence spectrometer, equipped with a micro focus x-ray tube, is used.

2. The method of claim 1, wherein the x-ray excitation beam comprises x-rays having energies greater than 10 keV.

3. The method of claim 1, wherein the x-ray excitation beam comprises a power of less than about 100 Watts.

4. The method of claim 1, further comprising the step of determining the identity of the isolated, flow-separated component.

5. The method of claim 1, wherein the potential pharmaceutical chemicals comprise at least one element having an atomic number greater than eight.

6. The method of claim 5, wherein the at least one element having an atomic number greater than eight is selected from fluorine, chlorine, bromine, iodine, sulfur, phosphorus, selenium, lanthanum, cerium, praseodymium, neodymium, samarium, europium, gadolinium, terbium, dysprosium, holmium, erbium, thulium, ytterbium, lutetium, antimony, bismuth, and arsenic.

7. An apparatus for screening potential pharmaceutical chemicals for binding to at least one target binder, comprising in combination:
(a) a container for a solution of potential pharmaceutical chemicals and at least one target binder, wherein said potential pharmaceutical chemicals comprise an element having an atomic number of at least nine;
(b) a flow separator for separating said solution into at least two separated components;
(c) an x-ray excitation source for exposing at least one of said flow-separated components to an x-ray excitation beam; and
(d) an x-ray detector for detecting an x-ray fluorescent signal emitted from a flow-separated component;
**characterized in that** the apparatus additionally comprises
(e) a diverter for diverting said chosen flow-separated component from the remaining mixture,
and that the x-ray excitation source is an energy dispersive x-ray fluorescence spectrometer, equipped with a microfocus x-ray tube.

8. The apparatus of claim 7, wherein said x-ray excitation beam comprises x-rays having energies greater than 10 keV.

9. The apparatus of claim 7, wherein said x-ray excitation beam comprises a power of less than about 100 Watts.

## Patentansprüche

1. Ein Verfahren für das Screening potentieller pharmazeutischer Chemikalien auf Bindung an mindestens einen Ziel-Bindungspartner, umfassend die Schritte von:
(a) Vorbereitung einer Lösung von potentiellen pharmazeutischen Chemikalien und mindestens einem Ziel-Bindungspartner;
(b) Fluss-Trennung der Lösung in mindestens zwei getrennte Komponenten;
(c) Exposition mindestens einer der Fluss-getrennten Komponenten gegenüber einem Röntgen-Anregungsstrahl; und
(d) Detektion eines Röntgen-Fluoreszenzsignals, das von der mindestens einen exponierten, Fluss-getrennten Komponente emittiert wurde;
dadurch charakterisiert, dass das Verfahren zusätzlich den Schritt von
(e) Isolierung jeglicher Fluss-getrennter Komponenten mit einem detektierbaren Röntgen-Fluoreszenz-Signal
umfasst und dass ein energiedispersives Röntgenfluoreszenz-Spektrometer, ausgestattet mit einer Mikrofokus-Röntgenröhre, verwendet wird.

2. Das Verfahren von Anspruch 1, wobei der Röntgen-Anregungsstrahl Röntgenstrahlen mit Energien größer als 10 keV umfasst.

3. Das Verfahren von Anspruch 1, wobei der Röntgen-Anregungsstrahl eine Leistung von weniger als etwa 100 Watt umfasst.

4. Das Verfahren von Anspruch 1, außerdem umfassend den Schritt von Bestimmung der Identität der isolierten Fluss-getrennten Komponenten.

5. Das Verfahren von Anspruch 1, wobei die potentiellen pharmazeutischen Chemikalien mindestens ein Element mit einer Ordnungszahl größer als Acht umfassen.

6. Das Verfahren von Anspruch 5, wobei das mindestens eine Element mit einer Ordnungszahl größer als Acht ausgewählt ist aus Fluor, Chlor, Brom, Iod, Schwefel, Phosphor, Selen, Lanthan, Cer, Praseodym, Neodym, Samarium, Europium, Gadolinium, Terbium, Dysprosium, Holinium, Erbium, Thulium, Ytterbium, Lutetium, Antimon, Bismut und Arsen.

7. Eine Vorrichtung für das Screening potentieller pharmazeutischer Chemikalien auf Bindung an mindestens einen Ziel-Bildungspartner, in Kombination umfassend:
(a) einen Behälter für eine Lösung von potentiellen pharmazeutischen Chemikalien und mindestens einem Ziel-Bindungspartner, wobei jene potentiellen pharmazeutischen Chemikalien ein Element mit einer Ordnungszahl von mindestens Neun umfassen;
(b) einen Fluss-Separator zum Trennen jener Lösung in mindestens zwei getrennte Komponenten;
(c) eine Röntgen-Anregungsquelle zur Exposition mindestens einer jener Fluss-getrennten Komponenten gegenüber einem Röntgen-Anregungsstrahl; und
(d) einen Röntgen-Detektor zur Detektion eines Röntgen-Fluoreszenzsignals, das von einer Fluss-getrennten Komponenten emittiert wurde;
dadurch charakterisiert, dass die Vorrichtung zusätzlich
(e) einen Ableiter zur Ableitung jener ausgewählten Fluss-getrennten Komponente von der verbleibenden Mischung umfasst,
und das die Röntgen-Anregungsquelle ein energiedispersives Röntgen-Fluoreszenz-Spektrometer ist, ausgestattet mit einer Mikrofokus-Röntgenröhre.

8. Die Vorrichtung von Anspruch 7, wobei jener Röntgen-Anregungsstrahl Röntgenstrahlen mit Energien größer als 10 keV umfasst.

9. Die Vorrichtung von Anspruch 7, wobei jener Röntgen-Anregungsstrahl eine Leistung von weniger als etwa 100 Watt umfasst.

## Revendications

1. Procédé de criblage de produits chimiques pharmaceutiques potentiels pour la liaison à au moins un liant cible, comprenant les étapes suivantes :
(a) la préparation d'une solution de produits chimiques pharmaceutiques potentiels et d'au moins un liant cible ;
(b) la séparation d'écoulement de la solution en au moins deux composants séparés ;
(c) l'exposition d'au moins un des composants séparés par écoulement à un faisceau d'excitation de rayons X ; et
(d) la détection d'un signal de fluorescence X émis par le au moins un composant séparé par écoulement et exposé ;
**caractérisé en ce que** le procédé comprend en outre l'étape
(e) d'isolement d'un quelconque composant séparé par écoulement présentant un signal de fluorescence X détectable,
et **en ce qu'**un spectromètre de fluorescence X à dispersion d'énergie, équipé d'un tube à rayons X à microfoyer, est utilisé.

2. Procédé selon la revendication 1, dans lequel le faisceau d'excitation de rayons X comprend des rayons X ayant des énergies supérieures à 10 keV.

3. Procédé selon la revendication 1, dans lequel le faisceau d'excitation de rayons X comprend une puissance de moins d'environ 100 watts.

4. Procédé selon la revendication 1, comprenant en outre l'étape de détermination de l'identité du composant séparé par écoulement et isolé.

5. Procédé selon la revendication 1, dans lequel les produits chimiques pharmaceutiques potentiels comprennent au moins un élément ayant un numéro atomique supérieur à huit.

6. Procédé selon la revendication 5, dans lequel le au moins un élément ayant un numéro atomique supérieur à huit est choisi parmi le fluor, le chlore, le brome, l'iode, le soufre, le phosphore, le sélénium, le lanthane, le cérium, le praséodyme, le néodyme, le samarium, l'europium, le gadolinium, le terbium, le dysprosium, l'holmium, l'erbium, le thulium, l'ytterbium, le lutétium, l'antimoine, le bismuth et l'arsenic.

7. Appareil de criblage de produits chimiques pharmaceutiques potentiels pour la liaison à au moins un liant cible, comprenant en combinaison :
(a) un récipient pour une solution de produits chimiques pharmaceutiques potentiels et d'au moins un liant cible, dans lequel lesdits produits chimiques pharmaceutiques potentiels comprennent un élément ayant un numéro atomique égal à au moins neuf ;
(b) un séparateur d'écoulement pour séparer ladite solution en au moins deux composants séparés ;
(c) une source d'excitation de rayons X pour exposer au moins un desdits composants séparés par écoulement à un faisceau d'excitation de rayons X ; et
(d) un détecteur de rayons X pour détecter un signal de fluorescence X émis par un composant séparé par écoulement ;
**caractérisé en ce que** l'appareil comprend en outre
(e) un partiteur pour détourner ledit composant choisi séparé par écoulement à partir du mélange restant,
et **en ce que** la source d'excitation de rayons X est un spectromètre de fluorescence X à dispersion d'énergie, équipé d'un tube à rayons X à microfoyer.

8. Appareil selon la revendication 7, dans lequel ledit faisceau d'excitation de rayons X comprend des rayons X ayant des énergies supérieures à 10 keV.

9. Appareil selon la revendication 7, dans lequel ledit faisceau d'excitation de rayons X comprend une puissance de moins d'environ 100 watts.
